**Europäisches Patentamt**

**European Patent Office**

**Office européen des brevets**

(19)

(11) Veröffentlichungsnummer: **0 139 974**
**B1**

# EUROPÄISCHE PATENTSCHRIFT

(12)

(45) Veröffentlichungstag der Patentschrift:
28.01.87

(51) Int. Cl.⁴: **F 16 C 23/04**

(21) Anmeldenummer: **84109906.2**

(22) Anmeldetag: **20.08.84**

(54) Lageranordnung mit einem selbsteinstellenden Kalottenlager.

(30) Priorität: **07.09.83 DE 3332323**

(43) Veröffentlichungstag der Anmeldung:
**08.05.85 Patentblatt 85/19**

(45) Bekanntmachung des Hinweises auf die Patenterteilung:
**28.01.87 Patentblatt 87/5**

(84) Benannte Vertragsstaaten:
**CH DE FR GB IT LI NL**

(56) Entgegenhaltungen:
**DE - C - 145 486**
**DE - C - 196 033**
**FR - A - 965 759**
**FR - A - 1 099 899**
**FR - A - 1 152 310**
**FR - A - 2 056 574**
**FR - A - 2 059 175**
**US - A - 3 671 092**

(73) Patentinhaber: **Siemens Aktiengesellschaft Berlin und München, Wittelsbacherplatz 2, D-8000 München 2 (DE)**

(72) Erfinder: **Lindner, Adolf, Dipl.-Ing., Grasholzstrasse 13, D-8702 Rottendorf (DE)**

Beschreibung

Die Erfindung bezieht sich auf eine Lageranordnung mit einem selbsteinstellenden Kalottenlager gemäss Oberbegriff des Anspruchs 1; eine derartige Lageranordnung ist durch die FR-A-965 759 bekannt.

Im bekannten Fall der FR-A-965 759 ist die Kalotte an ihrem der teilkugelförmigen Aussenfläche abgewandten anderen Ende durch die axial offene Aushöhlung in einen radial inneren, die Innenbohrung aufnehmenden zylindrischen Teil und einen radial äusseren teilringförmigen Teil mit flacher Stirnfläche aufgeteilt, an den die Klemmfinger mit ihren elastischen Enden anliegen.

Andere bekannte Kalottenlager enthalten eine aus Voll-Sintermaterial gefertigte Kalotte mit an beiden axialen Endbereichen konvexen teilkugelförmigen Aussenflächen. An der einen teilkugelförmigen Aussenfläche liegen die Finger der sich in der Lageraufnahme abstützenden federnden Klemmfeder an, die die Kalotte mit ihrer anderen teilkugelförmigen Aussenfläche gegen eine entsprechend geformte konkave Anlageschulter in der Lageraufnahme andrückt. Durch Verändern bzw. Wahl der Federspannkraft der Klemmfeder kann das Lagerverstellmoment im gewünschten Sinne beeinflusst werden.

Der Erfindung liegt die Aufgabe zugrunde, ohne Beeinträchtigung der Selbsteinstellbarkeit der Kalotte eine kompaktere und mit geringerem Arbeitsaufwand herzustellende Lageranordnung gemäss Oberbegriff des Patentanspruchs 1 zu schaffen. Diese Aufgabe wird erfindungsgemäss bei einer Lageranordnung der eingangs genannten Art durch die Lehre des Anspruchs 1 gelöst; die Gegenstände der Unteransprüche kennzeichnen vorteilhafte Ausgestaltungen der Erfindung.

Die erfindungsgemässe Lageranordnung ermöglicht mit ihrer nur axial einseitig vorgesehenen sphärischen Teilaussenfläche und ihrer innen in die Kalottenschale mit korrespondierenden konkaven Innenfläche eingreifenden, kraftschlüssigen Lagesicherung eine sehr kurze axiale Baulänge bei gewährleisteter guter Selbsteinstellbarkeit der Kalotte; die Kalotte kann ausserdem in insbesondere fertigungstechnisch vorteilhafter Weise als hinterschnittfreies, einteiliges Blech-Pressteil ausgebildet werden, das mit nur in einer Bearbeitungsrichtung bewegbaren Werkzeugen herstellbar ist.

Es sind zwar schon durch spanlose Verformung aus Blechbandmaterial gefertigte Gelenklager bekanntgeworden (DE-U-69 33 011), jedoch sind diese nur in komplizierter Blech-Biegetechnik mit mehrfacher Änderung der Biegerichtung herstellbar.

Wenn nach einer Ausgestaltung der Erfindung weiterhin vorgesehen ist, dass zwischen der Innenfläche der Kalotte und der Klemmbrille ein Zwischenring, insbesondere in Form eines Kunststoff-Druckstückes, angeordnet ist, erübrigt sich die Einhaltung bzw. Beachtung einer genau zentrischen Montage der Klemmbrille in der Lageraufnahme; auch bei grösseren Fertigungstoleranzen für die Kalotte kann u.a. eine gleichmässige Vorspannung sämtlicher Finger der Klemmfeder gewährleistet werden.

Die Erfindung sowie weitere vorteilhafte Ausgestaltungen der Erfindung werden im folgenden anhand zweier schematisch dargestellter Ausführungsbeispiele in der Zeichnung näher erläutert; es zeigen:

Fig. 1 in einem axialen Längsschnitt ein erstes Ausführungsbeispiel;

Fig. 2 eine stirnseitige Draufsicht auf eine in Fig. 1 benutzte Klemmfeder;

Fig. 3 in einem axialen Längsschnitt ein zweites Ausführungsbeispiel.

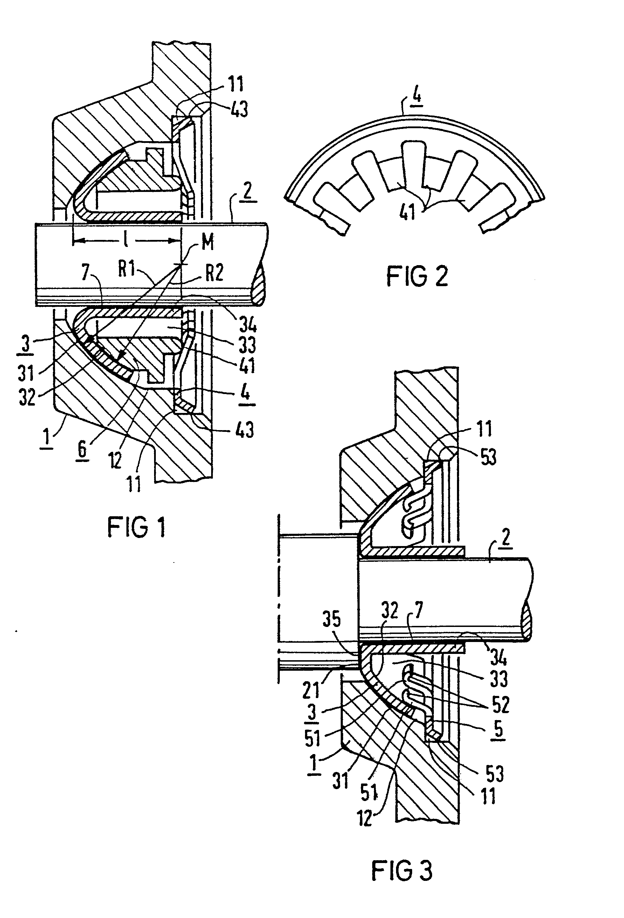

Gemäss Fig. 1 und Fig. 2 ist jeweils eine Welle 2 über ein Kalottenlager 3 in einem Lagerschild 1 gelagert. Die Kalotte 3 besteht jeweils aus einem schalenförmigen Blech-Pressteil mit einer an einer Lagerschulter 12 des Lagerschildes 1 anliegenden konvexen teilkugelförmigen Aussenfläche 31 und einer entsprechenden konkaven Innenfläche 32, sowie einer zylindrischen axialen Innenbohrung 34, sowie einer axialen Öffnung 33. Gemäss Fig. 3 ist zusätzlich zwischen der zylindrischen Innenbohrung 34 und dem sphärischen, an der Lagerschulter 12 anliegenden Teil der Kalotte eine Anlageschulter 35 einstückig mitangeformt, gegen den ein entsprechender Absatz 21 der Welle 2 anliegt.

Zur Lagesicherung der Kalotte in der Lagerschulter 12 des Lagerschildes 1 ist jeweils eine Klemmfeder 4 bzw. 5 vorgesehen. Die Klemmfedern 4 bzw. 5 enthalten einen äusseren Rand 43 bzw. 53, mit dem sie in einer Federaufnahme 11 des Lagerschildes 1 in ihrer Endposition verkrallt sind. Mit ihren radialen inneren Fingern drücken sie federnd gegen die konkaven Innenfläche 32 der Kalotte 3. Im Fall des Ausführungsbeispiels nach Fig. 1 erfolgt dieser Andruck auf die konkave Innenfläche 32 der Kalotte 3 unter Vermittlung eines Kunststoff-Zwischenringes 6. Bei dem Ausführungsbeispiel gemäss Fig. 3 sind die Finger 51 derart geformt, dass sie unmittelbar an der konkaven Innenfläche 32 der Klemmfeder 3 anliegen. Um Schabeschäden zwischen den freien Enden der Finger 51 und der konkaven Innenfläche 32 der Kalotte 3 zu vermeiden, sind in vorteilhafter Weise die freien Enden der Finger 51 in Form von Bogen 52 von der konkaven Innenfläche 32 der Kalotte 3 weggebogen.

Erfindungsgemäss wird also die erwünschte kraftschlüssige Lagerung und Einstellbarkeit der Kalotte nicht mit zwei axial gegenüberliegenden konvexen Kalotten, sondern nur mit einer einzigen konvexen schalenförmigen Kalotte erreicht, deren teilkugelförmige Aussenfläche den Radius R1 und deren teilkugelförmige konkave Innenfläche den Kugelradius R2 zum gemeinsamen Kugelmittelpunkt M aufweisen. Die Ausführung mit einer derartigen nur einseitigen schalenförmigen Kalotte ermöglicht die wirtschaftliche Herstellung als dünnwandiges Blech-Pressteil; die erfindungsgemässe Kalotte kann einschliesslich Zwischenring 6 und Klemmfeder 4 bzw. 5 innerhalb des durch die Lagerlänge 1 vorgegebenen Einbauraums untergebracht werden.

Zur Verbesserung der Gleiteigenschaften zwischen der Welle 2 und der Innenbohrungsfläche 34 der Kalotte 3 ist in zweckmässiger Weise auf der der Welle 2 zugewandten Fläche der Innenbohrung 34 eine Kunststoff-Gleitschicht mit einem besonders niedrigen Reibungskoeffizienten aufgetragen. Die Klemmfeder 4 bzw. 5 wird zweckmässigerweise zur Montagevereinfachung als «selbstsperrendes» und/oder als Stanz-Biegeteil hergestelltes Bauteil ausgeführt.

## Patentansprüche

1. Lageranordnung mit einem selbsteinstellenden Kalottenlager mit einer Kalotte (3), die in einer zylindrischen axialen Innenbohrung (34) eine Welle (2) aufnimmt sowie an ihrem einen axialen Ende mit einer konvexen teilkugelförmigen Aussenfläche (31) mittels einer in einer Federaufnahme abgestützten federnden Klemmfeder (4 bzw. 5) gegen eine der teilkugelförmigen Aussenfläche (31) entsprechende Lagerschulter (12) einer Lageraufnahme gedrückt ist und die eine axial offene Aushöhlung an ihrem anderen axialen Ende aufweist, dadurch gekennzeichnet, dass die Kalotte (3) schalenförmig mit einer der an der Lagerschulter (12) anliegenden konvexen teilkugelförmigen Aussenfläche (31) entsprechenden konkaven Innenfläche (32) sowie mit einer dieser axial abgewandten Öffnung (33) ausgebildet ist und die Klemmfeder (4, 5) mittel- oder unmittelbar an der Innenfläche (32) anliegt.

2. Lageranordnung nach Anspruch 1, dadurch gekennzeichnet, dass zwischen der Innenfläche (32) der Kalotte (3) und der Klemmfeder (4) ein Zwischenring (6, Fig. 1) angeordnet ist.

3. Lageranordnung nach Anspruch 1, dadurch gekennzeichnet, dass die Klemmfeder (5) mit ihren Fingern (51, 52, Fig. 3) direkt an der Innenfläche (32) der Kalotte (3) anliegt.

4. Lageranordnung nach einem der Ansprüche 1 bis 3, dadurch gekennzeichnet, dass die Kalotte (3) aus einem einteiligen, hinterschnitt freien Blechteil, insbesondere einem Blech-Pressteil, besteht.

5. Lageranordnung nach einem der Ansprüche 1 bis 4, dadurch gekennzeichnet, dass in die Kalotte (3) zwischen ihrer an der Lagerschulter (12) anliegenden teilkugelförmigen Aussenfläche (31) und ihrer die Welle (2) aufnehmenden zylindrischen Innenbohrungsfläche (34) eine gegen einen Absatz (21) der Welle (2) anlegbare Anlageschulter (35) eingeformt ist.

6. Lageranordnung nach einem der Ansprüche 1 bis 5, dadurch gekennzeichnet, dass die Kalotte (3) zumindest an ihrer der Welle (2) zugewandten Aussenfläche mittel- oder unmittelbar mit einer Kunststoff-Gleitschicht (6) versehen ist.

## Claims

1. A bearing arrangement with a self-aligning spherical bearing comprising a spherical insert (3) which in a cylindrical axial inner bore (34) accommodates a shaft (2) and at its one axial end has a convex part-spherical outer surface (3), which is pressed by means of a resilient clamping spring (4, 5) supported in a spring receptacle against a bearing shoulder (12) of a bearing cup, which corresponds to the semi-spherical outer surface (31), and which has an axially open groove at its other axial end, characterised in that the spherical insert (3) is cup-shaped with a concave inner surface (32), which corresponds to the convex part-spherical outer surface (31) which abuts upon the bearing shoulder (12), and with an opening (33) which axially faces away from said inner surface and the clamping spring (4, 5) indirectly or directly abuts upon the inner surface (32).

2. A bearing arrangement as claimed in claim 1, characterised in that an intermediate ring (6) (Fig. 1) is arranged between the inner surface (32) of the spherical insert (3) and the clamping spring (4).

3. A bearing arrangement as claimed in claim 1, characterised in that the clamping spring (5) directly abuts upon the inner surface (32) of the spherical insert (3) by means of its fingers (51, 52) (Fig. 3).

4. A bearing arrangement as claimed in one of claims 1 to 3, characterised in that the spherical insert (3) consists of an integral sheet component, in particular a pressed sheet component, which is free from undercuts.

5. A bearing arrangement as claimed in one of claims 1 to 4, characterised in that a locating shoulder (35), which can abut against a step (21) in the shaft (2), is formed on the spherical insert (3) between its part-spherical outer surface (31), which contacts the bearing surface (12) and its cylindrical inner bore (34) which houses the shaft (2).

6. A bearing arrangement as claimed in one of claims 1 to 5, characterised in that at least on its outer surface which faces the shaft (2) the spherical insert (3) is indirectly or directly provided with a synthetic low-friction layer (7).

## Revendications

1. Dispositif de palier à portée en calotte à autoréglage, comportant une calotte qui reçoit, dans un perçage axial intérieur (34), un arbre (2), et qui est pressée, à l'une de ses extrémités axiales, avec une surface extérieure convexe (31), de la forme d'une sphère partielle, et à l'aide d'un ressort de serrage (4, 5) prenant élastiquement appui dans un logement de ressort, contre un épaulement (12) d'un boîtier de palier, qui correspond à la surface extérieure (31) de la forme d'une sphère partielle, et qui comporte une cavité axiale ouverte à son autre extrémité partielle, caractérisé par le fait que la calotte (3) est réalisée sous la forme d'une coquille avec une surface intérieure concave (32) qui porte contre ledit épaulement (12) et qui correspond à la surface extérieure convexe (31) de la forme d'une sphère partielle, ainsi qu'avec une ouverture (33) axialement éloignée de cette dernière, ledit ressort de serrage (4, 3) portant indirectement ou directement contre la surface intérieure (32).

2. Dispositif de palier selon la revendication 1, caractérisé par le fait qu'entre la surface intérieure (32) de la calotte (3) et le ressort de serrage (4) est disposée une bague intermédiaire (6, Figure 1).

3. Dispositif de palier selon la revendication 1, caractérisé par le fait que le ressort de serrage (5) porte par ses doigts (51, 52 Figure 3) directement contre la surface intérieure (32) de la calotte (3).

4. Dispositif de palier selon l'une des revendications 1 à 3, caractérisé par le fait que la calotte (3) est constituée par un élément de tôle d'une pièce, sans détalonnage, en particulier par un élément de tôle emboutie.

5. Dispositif de palier selon l'une des revendications 1 à 4, caractérisé par le fait que dans la calotte (3), entre sa surface extérieure (31) de la forme d'une sphère partielle et portant contre l'épaulement (12) et la surface cylindrique (34) de son perçage intérieur qui reçoit l'arbre (2), est conformé un épaulement d'appui (35) susceptible d'être appliqué contre un talon (21) de l'arbre (2).

6. Dispositif de palier selon l'une des revendications 1 à 5, caractérisé par le fait que la calotte (3) est pourvue, au moins dans sa surface extérieure voisine de l'arbre (2), indirectement ou directement d'une couche de glissement en une matière plastique.

FIG 1

FIG 2

FIG 3